# DEMANDE DE BREVET EUROPEEN

(11) **EP 4 358 384 A1**
(43) Date de publication de la demande: **24.04.2024**
(21) Numéro de dépôt: 23202652.6
(22) Date de dépôt: 10.10.2023
(51) Int. Cl.: H02M 1/00, H02M 3/156

(54) **RÉGULATEUR DE TENSION ET PROCÉDÉ DE RÉGULATION CORRESPONDANT**

(30) Priorité: 21.10.2022 FR 2210961
(71) Demandeur: STMicroelectronics (Grand Ouest) SAS, 72100 Le Mans (FR)
(72) Inventeur: BELET, Christophe, 72250 PARIGNÉ L'ÉVÊQUE (FR)
(74) Mandataire: Casalonga

(57) **Abrégé**

Selon un aspect, il est proposé un régulateur de tension (REG) comportant un circuit de pré-régulation (3) configuré pour générer une première tension d'alimentation (Vo) à partir d'une source de tension (VIN), un régulateur à faible chute de tension (1) configuré pour générer une deuxième tension d'alimentation (VOUT) à partir de la première tension d'alimentation (Vo), et configuré pour filtrer une composante basse-fréquence (Vbf) de la première tension d'alimentation (Vo).

## Description

Des modes de réalisation et de mise en oeuvre concernent les circuits de régulation de tensions d'alimentation, notamment les régulateurs de tension à très faible bruit.

Les régulateurs de tension linéaires sont des circuits simples typiquement utilisés en électronique pour alimenter des périphériques avec une tension de sortie continue, constante et régulée.

Les régulateurs de tension linéaires fonctionnent comme des convertisseurs abaisseurs de tension continue en tension continue, ce qui signifie que la tension d'entrée est toujours supérieure à la tension de sortie. Typiquement, l'énergie est transférée de l'entrée vers la sortie par un transistor de puissance et la tension de sortie est régulée par une boucle de rétroaction polarisée par une tension de référence contrôlant le transistor de puissance via un amplificateur opérationnel.

Les régulateurs linéaires sont classiquement utilisés pour alimenter des périphériques sensibles nécessitant une source de puissance à très faible bruit, par exemple en comparaison à un régulateur de tension d'alimentation à découpage présentant typiquement un bruit de commutation non-négligeable.

Cependant, le principal inconvénient des régulateurs linéaires est qu'ils présentent une inefficacité en matière de perte de puissance, la perte de puissance étant proportionnelle au rapport entre la tension d'entrée sur la tension de sortie.

Par exemple, pour une alimentation par une source de puissance de 5 V (Volts) alimentant une charge périphérique à 1 V où la consommation de courant du périphérique est d'environ 1 A (Ampère), le périphérique consomme 1 W (Watt) (1V x 1A) et le régulateur linéaire perd 4W ((5V - 1V) x 1A). Cet exemple classique engendre un échauffement thermique de sensiblement 4 W par effet joule, et nécessite un système de refroidissement macroscopique (radiateur, ventilateur, etc), ce qui est très désavantageux.

Ainsi, il existe un besoin d'améliorer l'efficacité énergétique tout en gardant l'avantage d'un régulateur de tension linéaire pour une régulation à très faible bruit.

Des solutions classiques de pré-régulation d'un régulateur linéaire avec une alimentation à découpage ont été proposées. Les solutions classiques ne sont pas satisfaisantes en matière de régulation de tension à très faible bruit, ni même en matière d'optimisation de l'efficacité énergétique.

Des modes de réalisation et de mise en oeuvre définis ci-après permettent de réduire, voire annuler, le bruit d'une alimentation à découpage fournissant une tension de pré-régulation à un régulateur linéaire, de manière à maintenir un très faible bruit de sortie ; et permettent d'optimiser l'efficacité énergétique du régulateur, notamment en maintenant automatiquement le fonctionnement du régulateur linéaire très proche de sa « tension de chute » (usuellement désigné par les termes anglais « drop-out voltage », désignant la tension minimale d'entrée pour le fonctionnement du régulateur linéaire).

Selon un aspect, il est proposé à cet égard un régulateur de tension, par exemple réalisé de façon intégrée notamment au sein d'un circuit intégré, comportant un circuit de pré-régulation configuré pour générer une première tension d'alimentation à partir d'une source de tension, un régulateur à faible chute de tension configuré pour générer une deuxième tension d'alimentation à partir de la première tension d'alimentation, et configuré pour filtrer une composante basse-fréquence de la première tension d'alimentation.

Le circuit de pré-régulation représente la principale source de bruit au sein du régulateur de tension puisqu'il produit typiquement une composante basse-fréquence.

La composante basse-fréquence du bruit sur la première tension d'alimentation est ainsi atténuée, voire éliminée, en concevant le régulateur linéaire avec une bande-passante adaptée pour le filtrage du bruit basse-fréquence. Il est donc proposé un régulateur linéaire permettant d'assurer la régulation à partir de la première tension d'alimentation et en même temps d'agir comme un filtre passe-haut sur son entrée, de manière spécifiquement adaptée aux fréquences de la composante basse-fréquence dudit bruit.

Le régulateur de tension peut avantageusement comprendre en outre un circuit de filtre passe-bas configuré pour filtrer une composante haute-fréquence de la première tension d'alimentation.

Le circuit de pré-régulation produit typiquement également une composante haute-fréquence qui peut être déterminée selon des paramètres du circuit de pré-régulation. Le circuit de filtre passe-bas est ainsi conçu pour atténuer, voire éliminer, la composante haute-fréquence du bruit sur la première tension d'alimentation.

Ainsi, l'élimination de la composante haute-fréquence et de la composante basse-fréquence de la première tension d'alimentation permet d'atténuer voire d'annuler le bruit en sortie du régulateur à faible chute de tension, c'est-à-dire atténuer voire annuler le bruit dans la deuxième tension d'alimentation.

Par conséquent, le régulateur de tension permet de fournir une tension d'alimentation régulée (la deuxième tension d'alimentation) à extrêmement faible bruit, et en outre selon une efficacité énergétique avantageuse, voire optimale.

Selon un mode de réalisation, le régulateur à faible chute de tension comprend un transistor configuré pour générer la deuxième tension d'alimentation de façon commandée par une tension de commande adaptée pour réguler le niveau de la deuxième tension d'alimentation à un niveau de référence, dans lequel le circuit de pré-régulation est configuré pour générer la première tension d'alimentation à un niveau adapté, en fonction du niveau de référence, pour placer ledit transistor dans un régime linéaire.

En régime linéaire, le transistor est avantageusement capable de réguler le niveau de la deuxième tension d'alimentation de manière sensiblement proportionnelle à la tension de commande.

Selon un mode de réalisation, le circuit de pré-régulation comprend une alimentation à découpage configurée pour générer la première tension d'alimentation à un niveau supérieur au niveau de référence, d'un écart adapté pour dépasser une tension de saturation du transistor.

La tension de saturation est par exemple la tension minimale entre le collecteur et l'émetteur d'un transistor bipolaire, au-delà de laquelle le transistor est en régime linéaire. La différence de potentiel entre la première tension d'alimentation et la deuxième tension d'alimentation, est ainsi avantageusement définie pour être supérieure à la tension de saturation du transistor.

Avantageusement, cette différence de potentiel peut être maintenue à un niveau plaçant le transistor dans le régime linéaire mais proche de la limite du régime saturé, afin de bénéficier de performances optimales du régulateur à faible chute de tension.

Selon un mode de réalisation, ladite alimentation à découpage comporte une boucle de contre-réaction transmettant un signal de contre-réaction pour réguler la première tension d'alimentation, un circuit générateur de décalage étant configuré pour abaisser la tension du signal de contre-réaction d'un décalage du niveau de référence et d'une marge supplémentaire, de sorte que l'alimentation à découpage régule la première tension d'alimentation audit niveau de référence et de la marge supplémentaire.

La régulation de la première tension d'alimentation au niveau de référence et de la marge supplémentaire peut être réalisée facilement grâce à une configuration de l'alimentation à découpage avec une boucle de contre-réaction. L'alimentation à découpage dans cette configuration permet ainsi de fournir au régulateur à faible chute de tension une première tension d'alimentation dont la valeur de tension est suffisamment proche de celle de la tension de décrochage du régulateur linéaire (c'est-à-dire la tension de saturation du transistor) pour limiter la dissipation thermique de ce régulateur mais suffisamment élevée pour maintenir ce régulateur dans son régime linéaire.

D'autre part, il est avantageusement proposé dans ce mode de réalisation de positionner la première tension d'alimentation audit niveau de référence ajouté de ladite marge, par le biais d'un décalage du signe opposé, introduit sur le signal de contre-réaction.

Selon un mode de réalisation, l'alimentation à découpage comprend des moyens de commutation configurés pour fonctionner à une fréquence de commutation forcée, le circuit de filtre passe-bas étant configuré pour avoir une fréquence de coupure inférieure à la fréquence de commutation forcée.

En effet, on peut considérer que la fréquence de commutation correspond à la fréquence de la composante haute-fréquence du bruit sur la première tension d'alimentation, qui peut être précisément filtrée vis-à-vis de la fréquence de coupure du filtre passe-bas, en forçant les moyens de commutation à fonctionner à une fréquence de commutation prédéterminée à cet égard.

En conséquence, le circuit de filtre passe-bas peut être dimensionné selon la fréquence de commutation prédéterminée de sorte à éliminer, efficacement et de manière maîtrisée, la composante haute-fréquence du bruit sur la première tension d'alimentation.

Selon un mode de réalisation, la fréquence de coupure est inférieure à la fréquence de commutation forcée d'un facteur au moins de 100.

Selon un autre aspect, il est proposé un procédé de régulation comprenant une génération d'une première tension d'alimentation à partir d'une source de tension et une génération d'une deuxième tension d'alimentation par un régulateur à faible chute de tension à partir de la première tension d'alimentation, le procédé comprenant en outre un filtrage d'une composante basse-fréquence de la première tension d'alimentation par le régulateur à faible chute de tension.

Le procédé peut avantageusement comprendre en outre un filtrage d'une composante haute-fréquence de la première tension d'alimentation.

Selon un mode de mise en oeuvre, la deuxième tension d'alimentation est générée par un transistor commandé par une tension de commande adaptée pour réguler le niveau de la deuxième tension d'alimentation à un niveau de référence, et dans lequel la première tension d'alimentation est générée à un niveau adapté, en fonction du niveau de référence, pour placer ledit transistor dans un régime linéaire.

Selon un mode de mise en oeuvre, la première tension d'alimentation est générée par une alimentation à découpage à un niveau supérieur au niveau de référence, d'un écart adapté pour dépasser une tension de saturation du transistor.

Selon un mode de mise en oeuvre, le procédé comprend une transmission d'un signal de contre-réaction par une boucle de contre-réaction de ladite alimentation à découpage pour réguler la première tension d'alimentation et un abaissement de la tension du signal de contre-réaction d'un décalage du niveau de référence et d'une marge supplémentaire, de sorte que l'alimentation à découpage régule la première tension d'alimentation audit niveau de référence et de la marge supplémentaire.

Selon un mode de mise en oeuvre, la première tension d'alimentation est générée par l'alimentation à découpage fonctionnant en commutation à une fréquence de commutation forcée, et le filtrage de la composante haute-fréquence est réalisé à une fréquence de coupure inférieure à la fréquence de commutation forcée.

Selon un mode de mise en oeuvre, la fréquence de coupure est inférieure à la fréquence de commutation forcée d'un facteur au moins de 100.

D'autres avantages et caractéristiques de l'invention apparaîtront à l'examen de la description détaillée de mode de réalisation et de mise en oeuvre, nullement limitatifs, et des dessins annexés sur lesquels :
[Fig 1] ;

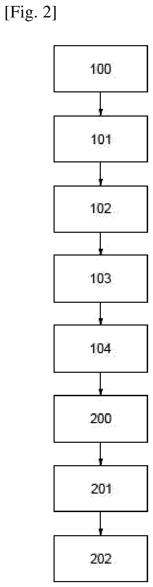

[Fig 2] illustrent schématiquement des modes de réalisation et de mise en oeuvre de l'invention.

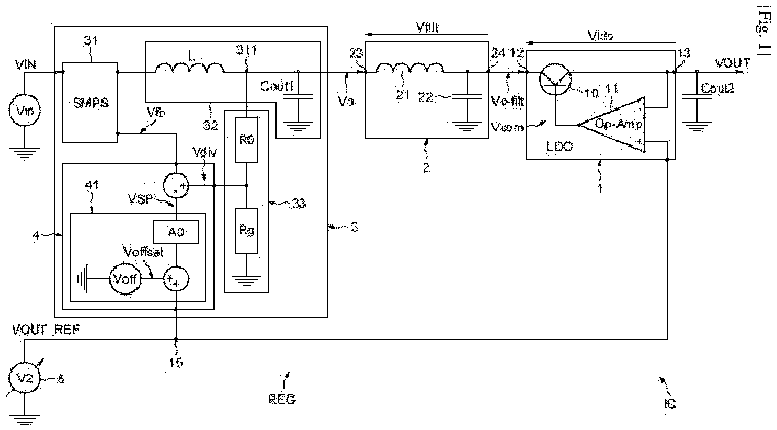

La figure 1 illustre un régulateur de tension REG selon un mode de réalisation. Le régulateur de tension REG comprend un régulateur à faible chute de tension 1. Le régulateur de tension REG est notamment destiné à être réalisé de façon intégrée, usuellement au sein d'un circuit intégré IC.

Le régulateur à faible chute de tension 1 est un régulateur linéaire à très faible bruit et à taux de réjection d'alimentation élevé sur une gamme de basses et moyennes fréquences. Le taux de réjection d'alimentation (connu sous l'acronyme « PSRR » qui signifie « Power supply rejection ratio » en anglais) du régulateur à faible chute de tension 1 est la capacité du régulateur à faible chute de tension 1 à atténuer ou bloquer lesdites basses et moyennes fréquences de son entrée 12. On peut considérer que cela (le « PSRR ») correspond à un effet de filtre passe-haut intrinsèque du régulateur à faible chute de tension 1.

Par exemple, le taux de réjection d'alimentation élevé est compris entre 60dB et 90dB, et la gamme de basses et moyenne fréquences est comprise entre 1 Hz et 100 kHz.

Le régulateur à faible chute de tension 1 comprend un transistor 10 commandé en boucle fermée avec un amplificateur 11. Le transistor 10 est avantageusement un transistor bipolaire, par exemple un transistor de type NPN, et l'amplificateur 11 est un amplificateur opérationnel à faible bruit.

Le collecteur du transistor 10 est couplé à une borne d'entrée 12 du régulateur à faible chute de tension 1 et l'émetteur du transistor 10 est couplé à une borne de sortie 13 du régulateur à faible chute de tension 1. L'amplificateur 11 possède une entrée inverseuse « - » couplée à la borne de sortie 13, une entrée non-inverseuse « + » couplée à un noeud de tension de référence 15, et une sortie couplée à une borne de commande du transistor 10. Un générateur de tension programmable 5 est configuré pour générer une tension de référence à un niveau de référence VOUT_REF, notamment sur le noeud de tension de référence 15. La valeur du niveau de référence VOUT_REF peut par exemple être définie et commandée par un utilisateur.

En d'autres termes, le transistor 10 est configuré pour générer la deuxième tension d'alimentation VOUT de façon commandée par une tension de commande Vcom. La tension de commande Vcom est générée par l'amplificateur 11 sur la borne de commande du transistor 10 (c'est-à-dire la borne de base) et est adaptée pour réguler le niveau de la deuxième tension d'alimentation VOUT au niveau de référence VOUT_REF.

Le régulateur de tension REG comprend dans cet exemple en outre un circuit de pré-régulation 3 et un circuit de filtre passe-bas 2. Le circuit de pré-régulation 3 possède une sortie 311 couplée en entrée 23 du circuit de filtre passe-bas 2, et le circuit de filtre passe-bas 2 possède une sortie 24 couplée à la borne d'entrée 12 du régulateur à faible chute de tension 1.

Cela étant le circuit de filtre passe-bas 2 est optionnel, et, dans une alternative, la sortie 311 du circuit de pré-régulation 3 peut être directement couplée sur la borne d'entrée 12 du régulateur à faible chute de tension 1.

Le circuit de pré-régulation 3 comprend une alimentation à découpage 31. L'alimentation à découpage 31 est un régulateur de type abaisseur de tension configuré pour générer une première tension d'alimentation Vo à partir d'une source d'alimentation VIN. La source d'alimentation VIN est par exemple une source de tension non-régulée telle que par exemple une batterie de produit portable ou une alimentation de type secteur.

La première tension d'alimentation Vo générée par ce type d'alimentation à découpage 31 comporte typiquement des composantes parasites de bruit telles qu'une composante haute-fréquence Vhf de bruit correspondant par exemple à la fréquence de découpage de l'alimentation à découpage 31 et une composante basse-fréquence Vbf de bruit correspondant par exemple au bruit de régulation de la boucle de contre réaction Vfb.

Ainsi, le filtre passe-bas 2, recevant la première tension d'alimentation Vo, permet de rejeter la composante parasite haute-fréquence Vhf du bruit. La tension filtrée Vo-filt, en sortie 24 du filtre 2, est ainsi transmise au régulateur à faible chute de tension 1.

Le régulateur à faible chute de tension 1, recevant la tension filtrée Vo-filt, permet d'une part de générer une deuxième tension d'alimentation VOUT à partir de la tension filtrée Vo-filt, et permet d'autre part de rejeter la composante parasite basse-fréquence Vbf du bruit non filtré par le filtre passe-bas 2. En particulier, le transistor 10 et l'amplificateur 11 sont conçus pour atténuer, voire éliminer la composante basse-fréquence Vbf du bruit en entrée 12 du régulateur à faible chute de tension 1.

Dans l'alternative où le régulateur REG ne comporte pas le filtre passe-bas 2, le régulateur à faible chute de tension 1 reçoit la première tension d'alimentation Vo générée en sortie 311 du circuit de pré-régulation 3. Ainsi, le régulateur à faible chute de tension 1 permet d'une part de générer la deuxième tension d'alimentation VOUT à partir de la première tension d'alimentation Vo, et permet d'autre part de rejeter la composante parasite basse-fréquence Vbf de la première tension d'alimentation Vo.

La borne de sortie 13 du régulateur à faible chute de tension 1 peut servir à alimenter une charge d'un périphérique (non-représenté) avec la deuxième tension d'alimentation VOUT régulée qui est constante et à extrêmement faible bruit.

En d'autres termes, le régulateur REG du type abaisseur de tension, présente un haut rendement énergétique et un très faible bruit, et comprend à cet égard le circuit de pré-régulation 3, le régulateur à faible chute de tension 1 et le circuit de filtre passe-bas 2.

D'une part, le circuit de pré-régulation 3 est configuré pour générer la première tension d'alimentation Vo à partir d'une source d'alimentation VIN et le régulateur à faible chute de tension 1 est configuré pour générer une deuxième tension d'alimentation VOUT à partir de la première tension d'alimentation Vo.

D'autre part, le circuit de filtre passe-bas 2 est configuré pour filtrer la composante haute-fréquence Vhf de la première tension d'alimentation Vo, tandis que le régulateur à faible chute de tension 1 est configuré pour filtrer la composante basse-fréquence Vbf de la première tension d'alimentation Vo.

Le circuit de pré-régulation 3 peut représenter la principale source de bruit au sein du régulateur de tension REG, produisant typiquement la composante haute-fréquence Vhf qui peut être déterminée selon des paramètres du circuit de pré-régulation 3. Le circuit de filtre passe-bas 2 est à cet égard spécifiquement conçu pour atténuer, voire éliminer, la composante haute-fréquence Vhf du bruit sur la première tension d'alimentation Vo.

La composante haute-fréquence Vhf issue du circuit de pré-régulation 3 tel que décrit précédemment peut avoir une fréquence constante et connue, notamment si on commande l'alimentation à découpage 31 dans un mode forcé de modulation de largeur d'impulsions.

La composante basse-fréquence Vbf du bruit sur la première tension d'alimentation Vo, peut également être principalement générée par le circuit de pré-régulation 3. La composante basse-fréquence Vbf est quant à elle atténuée, voire entièrement éliminée, en concevant le régulateur à faible chute de tension 1 avec une bande-passante adaptée pour le filtrage du bruit basse-fréquence Vbf.

Le régulateur linéaire 1 est ainsi avantageusement configuré pour à la fois assurer la régulation à partir de la première tension d'alimentation Vo et en même temps agir comme un filtre passe-haut sur son entrée 12, de manière spécifiquement adaptée aux fréquences de la composante basse-fréquence Vbf du bruit.

Ainsi, le filtrage de la composante haute-fréquence Vhf et de la composante basse-fréquence Vbf de la première tension d'alimentation Vo permet d'atténuer voire d'éliminer le bruit en sortie 13 du régulateur à faible chute de tension 1, c'est-à-dire dans la deuxième tension d'alimentation VOUT.

Par conséquent, le régulateur de tension REG selon cet aspect permet de fournir une tension d'alimentation régulée (la deuxième tension d'alimentation VOUT) et sans bruit (ou du moins à extrêmement faible bruit), et en outre selon une efficacité énergétique optimale, (ou du moins très avantageuse).

Par exemple, le circuit de filtre passe-bas 2 est un filtre passe-bas de deuxième ordre permettant de filtrer la composante haute-fréquence Vhf avec une atténuation égale à 40 dB par décade sur une gamme de fréquences supérieures ou égales à la fréquence de coupure Fc du filtre passe-bas 2. Le filtre passe-bas 2 est composé par exemple d'un premier élément inductif 21 et d'un premier élément capacitif 22.

Les éléments inductifs et les éléments capacitifs du circuit de filtre passe-bas 2 peuvent être dimensionnés de sorte que la fréquence de coupure Fc du circuit de filtre passe-bas 2 est au moins inférieure à la fréquence de découpage du régulateur 31 d'un facteur 100; par exemple la fréquence de coupure Fc vaut 30KHz si l'alimentation à découpage 31 a une fréquence de découpage Fpwm égale à 3MHz afin de réduire la composante haute-fréquence Vhf d'environ 80dB entre la sortie 24 et l'entrée 23 du filtre passe-bas.

L'homme du métier sera capable de dimensionner les valeurs inductive du premier élément inductif 21 et capacitive du premier élément capacitif 22 du filtre passe-bas 2 selon la fréquence de coupure Fc désirée.

Par ailleurs, l'alimentation à découpage 31 comporte des moyens de commutation (non-représentés) et son circuit de filtrage intrinsèque 32 composé d'un deuxième élément inductif L et d'un deuxième élément capacitif Cout1.

Les moyens de commutation sont configurés pour fonctionner à une fréquence de commutation forcée Fpwm et permettent de convertir la tension VIN de la source d'alimentation en la première tension d'alimentation Vo, filtrée par le circuit de filtrage 32, dont l'homme du métier sera capable de dimensionner la valeur inductive du deuxième élément inductif L et la valeur capacitive du deuxième élément capacitif Cout1 du circuit de filtrage 32.

La fréquence de commutation forcée Fpwm peut être obtenue en générant un signal à modulation de largeur d'impulsion (connu sous le terme « Pulse width modulation ») permettant de commander une ouverture et fermeture des moyens de commutation à une fréquence constante ou proche d'être constante et dont la largeur d'impulsion permet de faire varier la première tension d'alimentation Vo. La fréquence de commutation forcée Fpwm doit être la plus élevée possible mais est limitée par les pertes énergétiques de commutations de l'alimentation à découpage 31. Par exemple, la fréquence de commutation forcée Fpwm est comprise entre 1 MHz et 3 MHz.

Le fonctionnement de l'alimentation à découpage 31, en particulier des moyens de commutation, génère un bruit haute-fréquence correspondant à la composante haute-fréquence Vhf de la première tension d'alimentation Vo et stabilise la fréquence de la composante haute-fréquence à la fréquence de commutation forcée Fpwm. En particulier, la fréquence de coupure Fc du circuit de filtre passe-bas 2 est inférieure à la fréquence de commutation forcée Fpwm.

En effet, on peut considérer que la fréquence de commutation Fpwm correspond à la fréquence de la composante haute-fréquence Vhf du bruit sur la première tension d'alimentation Vo, qui peut être précisément filtrée vis-à-vis d'une fréquence de coupure Fc du circuit de filtre passe-bas 2. En effet, si la fréquence de la composante haute-fréquence Vhf est sensiblement constante, alors le circuit de filtre passe-bas 2 peut avantageusement avoir un comportement et un effet constants et maîtrisés sur la composante haute-fréquence Vhf.

En conséquence, le circuit de filtre passe-bas 2 peut être dimensionné selon la fréquence de commutation Fpwm prédéterminée de sorte à éliminer, efficacement et de manière maîtrisée, la composante haute-fréquence Vhf du bruit sur la première tension d'alimentation Vo.

Avantageusement, la fréquence de coupure Fc est inférieure à la fréquence de commutation forcée Fpwm d'un facteur au moins de 100. Autrement dit, on peut concevoir le circuit de filtre passe-bas 2 en fonction de la fréquence de commutation forcée Fpwm correspondant à une fréquence du signal à modulation de largeur d'impulsion contrôlée et maintenue à une valeur connue. Par exemple, la fréquence de coupure Fc est égale à 30 KHz pour une fréquence de commutation Fpwm de 3 MHz.

Le circuit de pré-régulation 3 comprend en outre un pont diviseur de tension 33 couplé à la sortie 311 de l'alimentation à découpage 31. Le pont diviseur de tension 33 comprend un premier élément résistif Ro et un deuxième élément résistif Rg. Le premier élément résistif Ro et le deuxième élément résistif Rg du pont diviseur 33 sont configurés pour fournir une tension représentative de la première tension d'alimentation Vo à un niveau adapté pour la boucle de contre-réaction 4 de l'alimentation à découpage 31.

L'alimentation à découpage 31 comprend une boucle de contre-réaction 4 couplée au pont diviseur de tension 33 et à une entrée FB de l'alimentation à découpage 31, et comprend un circuit générateur de décalage 41.

La boucle de contre-réaction 4 transmet un signal de contre-réaction de tension Vfb à l'alimentation à découpage 31 pour réguler la première tension d'alimentation Vo, typiquement afin de compenser une dérive de la première tension d'alimentation Vo et maintenir son niveau contant.

Avantageusement, le niveau de la première tension d'alimentation Vo est égal à la somme du niveau de référence VOUT_REF et d'une marge supplémentaire Voffset. La marge supplémentaire Voffset est une tension statique générée par le circuit générateur de décalage 41 pour compenser la chute de tension continue entre la première tension d'alimentation Vo et la deuxième tension d'alimentation VOUT.

En particulier, la boucle de contre-réaction 4 peut générer un bruit basse-fréquence sur la première tension d'alimentation Vo, produisant ainsi la composante basse-fréquence Vbf durant la régulation de la première tension d'alimentation Vo par l'alimentation à découpage 31.

En d'autres termes, le circuit générateur de décalage 41 est configuré pour abaisser la tension Vfb du signal de contre-réaction d'un décalage du niveau de référence VOUT_REF et d'une marge supplémentaire Voffset, de sorte que l'alimentation à découpage 31 régule la première tension d'alimentation Vo au niveau de référence VOUT_REF et de la marge supplémentaire Voffset.

La régulation de la première tension d'alimentation Vo au niveau de référence VOUT_REF et de la marge supplémentaire Voffset permet ainsi de fournir au régulateur à faible chute de tension 1 une première tension d'alimentation Vo dont la valeur de tension est suffisamment proche de la tension de décrochage Vldo du régulateur à faible chute de tension 1 pour limiter la dissipation thermique du régulateur à faible chute de tension 1 mais suffisamment élevée pour maintenir le régulateur à faible chute de tension 1 dans son régime linéaire.

On peut par exemple définir la marge supplémentaire Voffset de la manière suivante : Voffset = Vfilt + Vldo + Vmargin avec Vfilt étant la chute de tension produite par le circuit de filtre passe-bas 2, Vldo étant la chute de tension produite par le régulateur à faible chute de tension 1 et Vmargin étant une autre tension de marge estimée pour s'assurer que le régulateur à faible chute de tension 1 fonctionne en régime linéaire indépendamment du bruit crête-à-crête sur la tension Vfilt.

Dans l'alternative mentionnée précédemment où le régulateur de tension REG ne comprend pas de filtre passe-bas 2, la marge supplémentaire Voffset peut être définie de la manière suivante : Voffset = Vldo + Vmargin avec la tension de marge Vmargin prédéfinie pour s'assurer que le régulateur à faible chute de tension 1 fonctionne en régime linéaire.

La tension de décrochage Vldo (connu sous le terme « Drop-out voltage » en anglais) du régulateur à faible chute de tension 1, qui correspond à la tension de saturation Vsat du transistor 10, est la tension d'alimentation minimum permettant au transistor 10 de fonctionner dans son régime linéaire, c'est-à-dire pour que celui-ci puisse réguler la deuxième tension d'alimentation VOUT à un niveau constant et avec un bruit extrêmement faible. En effet, la composante basse-fréquence Vbf du signal Vo-filt risque d'être transmise en sortie 13 du régulateur à faible chute de tension 1, dans la deuxième tension d'alimentation VOUT, si le transistor 10 ne fonctionne pas dans le régime linéaire.

Le niveau de la première tension d'alimentation Vo est suffisamment élevé pour assurer que le régulateur linéaire 1 est alimenté juste au-dessus de sa tension de décrochage Vldo et donc que le transistor 10 fonctionne dans un régime linéaire, de manière automatique quelles que soient les conditions, du fait de l'usage de la tension de référence commune VOUT_REF. Dans le cas d'un transistor bipolaire, la tension entre le collecteur et l'émetteur du transistor 10, égale à l'écart entre la tension filtrée Vo-filt et la deuxième tension d'alimentation VOUT (ou l'écart entre la première tension d'alimentation Vo et la deuxième tension d'alimentation VOUT dans le cas de l'alternative présentée précédemment), est défini pour être supérieure en valeur absolue à la tension de saturation Vsat (usuellement désignée « VCEsat » dans le cas d'un transistor bipolaire) qui est usuellement comprise entre 0,1V et 0,5V.

En outre, l'écart entre la première tension d'alimentation Vo, régulée au niveau de référence VOUT_REF et de la marge supplémentaire Voffset, et la deuxième tension d'alimentation VOUT, régulée au niveau de référence VOUT_REF, permet d'éviter le fonctionnement du transistor dans un régime saturé. En effet, la régulation de la deuxième tension d'alimentation VOUT est dégradée si le transistor 10 entre en saturation. Avantageusement, l'écart entre la première tension d'alimentation Vo et la deuxième tension d'alimentation VOUT peut être maintenu à un niveau proche de la limite du régime saturé, afin de bénéficier de performances optimales du régulateur à faible chute de tension 1.

A titre indicatif, la source de tension VIN alimente le circuit de pré-régulation 3 par une tension de 5V et une deuxième tension d'alimentation VOUT égale à 1V alimente la charge d'un périphérique consommant un courant de 1A. En supposant que la chute de tension Vldo-dc du régulateur à faible chute de tension 1 vaut 150mV (ce qui revient à une perte énergétique de 150mW), que la chute de tension Vfilt-dc du circuit de filtre passe-bas vaut 50 mV (ce qui revient à une perte énergétique de 50mW), que la marge supplémentaire Voffset vaut 50 mV et que le circuit de pré-régulation 3 a un rendement énergétique de l'ordre de 90% (ce qui revient à une perte énergétique de 133mW), alors les pertes énergétiques du circuit complet sont de l'ordre de 333mW ; soit un rendement énergétique de l'ordre de 75%.

Cet ordre de grandeur des pertes énergétiques permet en particulier d'utiliser un système de refroidissement simple et peu encombrant, voire de ne pas nécessiter de système de refroidissement.

A titre de comparaison, un circuit classique ayant des spécifications et caractéristiques analogues, mais en utilisant uniquement un régulateur à faible chute de tension 1 de manière isolée au lieu du régulateur de tension REG, présente des pertes énergétiques de l'ordre de 4W ; soit un rendement énergétique de l'ordre de 20% nécessitant typiquement l'usage d'un système de refroidissement performant et usuellement très encombrant.

La figure 2 illustre un exemple de procédé de régulation de la deuxième tension d'alimentation VOUT par un régulateur de tension REG tel que décrit précédemment en relation avec la figure 1.

Le procédé comprend une étape 100 de génération de la première tension d'alimentation Vo à partir de la source de tension VIN. Par exemple, la tension VIN est convertie par les moyens de commutation de l'alimentation à découpage 31 en la première tension d'alimentation Vo.

Le procédé peut par exemple comprendre une étape 101 de transmission du signal de contre-réaction de tension Vfb à l'alimentation de découpage 31, pour réguler la première tension d'alimentation Vo. La tension Vfb du signal de contre-réaction est générée en fonction de la tension Vdiv correspondant la première tension d'alimentation Vo et au niveau de référence VOUT_REF.

En particulier, la première tension d'alimentation Vo est avantageusement générée à un niveau supérieur au niveau de référence VOUT_REF d'un écart adapté pour dépasser la tension de saturation Vsat du transistor 10.

Le procédé peut comprendre à cet égard une étape 102 d'abaissement de la tension Vfb du signal de contre-réaction d'un niveau correspondant au décalage du niveau de référence VOUT_REF et de la marge supplémentaire Voffset, de sorte que l'alimentation à découpage 31 régule la première tension d'alimentation Vo au niveau de référence VOUT_REF et de la marge supplémentaire Voffset.

Le procédé peut par exemple comprendre une étape 103 de génération de la première tension d'alimentation Vo par l'alimentation à découpage 31 dans lequel les moyens de commutation fonctionnent à une fréquence de commutation forcée Fpwm.

Le procédé comprend, optionnellement, une étape 104 de filtrage de la composante haute-fréquence Vhf de la première tension d'alimentation Vo. Le filtrage permet la génération et la transmission d'une tension d'alimentation à très faible bruit Vo-filt au régulateur à faible chute de tension 1.

A l'étape 104, le filtrage de la composante haute-fréquence Vhf est réalisée à une fréquence de coupure Fc inférieure à la fréquence de commutation Fpwm. La composante haute-fréquence Vhf peut ainsi être stabilisée par une commande des moyens de commutation de l'alimentation à découpage 31 par un signal forçant une modulation à largeur d'impulsion. Les moyens de commutation fonctionnent ainsi à une fréquence de commutation forcée Fpwm, avantageusement supérieure à la fréquence de coupure Fc du circuit de filtre passe-bas 2.

Le procédé comprend une étape 200 de filtrage de la composante basse-fréquence Vbf. En particulier, le filtrage est réalisé sur l'entrée 12 du régulateur à faible chute de tension 1, par exemple avantageusement de manière spécifiquement adaptée aux fréquences de la composante basse-fréquence Vbf dudit bruit.

Le procédé comprend enfin une étape 201 de génération de la deuxième tension d'alimentation VOUT qui est constante et très faiblement bruitée, à partir de la première tension d'alimentation Vo. La génération de la deuxième tension d'alimentation VOUT peut par exemple servir à l'alimentation de la charge d'un périphérique à la deuxième tension d'alimentation VOUT.

L'étape 201 de génération de la deuxième tension d'alimentation VOUT comprend en pratique une régulation 202 de la deuxième tension d'alimentation VOUT à un niveau de référence VOUT_REF. Plus particulièrement, la génération de la deuxième tension d'alimentation VOUT comprend la commande du transistor 10 par un signal de commande Vcom adaptée pour réguler le niveau de la deuxième tension d'alimentation VOUT au niveau de référence VOUT_REF.

## Revendications

1. Régulateur de tension (REG) comportant un circuit de pré-régulation (3) configuré pour générer une première tension d'alimentation (Vo) à partir d'une source de tension (VIN), un régulateur à faible chute de tension (1) configuré pour générer une deuxième tension d'alimentation (VOUT) à partir de la première tension d'alimentation (Vo), et configuré pour filtrer une composante basse-fréquence (Vbf) de la première tension d'alimentation (Vo).

2. Régulateur de tension selon la revendication 1, comprenant en outre un circuit de filtre passe-bas (2) configuré pour filtrer une composante haute-fréquence (Vhf) de la première tension d'alimentation (Vo).

3. Régulateur de tension selon l'une des revendications 1 ou 2, dans lequel le régulateur à faible chute de tension (1) comprend un transistor (10) configuré pour générer la deuxième tension d'alimentation (VOUT) de façon commandée par une tension de commande (Vcom) adaptée pour réguler le niveau de la deuxième tension d'alimentation (VOUT) à un niveau de référence (VOUT_REF), dans lequel le circuit de pré-régulation (3) est configuré pour générer la première tension d'alimentation (Vo) à un niveau adapté, en fonction du niveau de référence (VOUT_REF), pour placer ledit transistor (10) dans un régime linéaire.

4. Régulateur de tension selon la revendication 3, dans lequel le circuit de pré-régulation (3) comprend une alimentation à découpage (31) configurée pour générer la première tension d'alimentation (Vo) à un niveau supérieur au niveau de référence (VOUT_REF), d'un écart adapté pour dépasser une tension de saturation (Vsat) du transistor (10).

5. Régulateur de tension selon la revendication 4, dans lequel ladite alimentation à découpage (31) comporte une boucle de contre-réaction (4) transmettant un signal de contre-réaction pour réguler la première tension d'alimentation (Vo), un circuit générateur de décalage (41) étant configuré pour abaisser la tension (Vfb) du signal de contre-réaction d'un décalage du niveau de référence (VOUT_REF) et d'une marge supplémentaire (Voffset), de sorte que l'alimentation à découpage (31) régule la première tension d'alimentation (Vo) audit niveau de référence (VOUT_REF) et de la marge supplémentaire (Voffset).

6. Régulateur de tension selon l'une des revendications 4 ou 5, dans lequel l'alimentation à découpage (31) comprend des moyens de commutation configurés pour fonctionner à une fréquence de commutation forcée (Fpwm), le circuit de filtre passe-bas (2) étant configuré pour avoir une fréquence de coupure (Fc) inférieure à la fréquence de commutation forcée (Fpwm).

7. Régulateur de tension selon la revendication 6, dans lequel la fréquence de coupure (Fc) est inférieure à la fréquence de commutation forcée (Fpwm) d'un facteur au moins de 100.

8. Régulateur de tension selon l'une des revendications 1 à 7, réalisé de façon intégrée.

9. Procédé de régulation comprenant une génération d'une première tension d'alimentation (Vo) à partir d'une source de tension (VIN) et une génération d'une deuxième tension d'alimentation (VOUT) par un régulateur à faible chute de tension (1) à partir de la première tension d'alimentation (Vo), le procédé comprenant en outre un filtrage d'une composante basse-fréquence (Vbf) de la première tension d'alimentation (Vo) par le régulateur à faible chute de tension (1).

10. Procédé de régulation selon la revendication 9, comprenant en outre un filtrage d'une composante haute-fréquence (Vhf) de la première tension d'alimentation (Vo).

11. Procédé de régulation selon l'une des revendication 9 ou 10, dans lequel la deuxième tension d'alimentation (VOUT) est générée par un transistor (10) commandé par une tension de commande (Vcom) adaptée pour réguler le niveau de la deuxième tension d'alimentation (VOUT) à un niveau de référence (VOUT_REF), et dans lequel la première tension d'alimentation (Vo) est générée à un niveau adapté, en fonction du niveau de référence (VOUT_REF), pour placer ledit transistor (10) dans un régime linéaire.

12. Procédé de régulation selon la revendication 11, dans lequel la première tension d'alimentation (Vo) est générée par une alimentation à découpage (31) à un niveau supérieur au niveau de référence (VOUT_REF), d'un écart adapté pour dépasser une tension de saturation (Vsat) du transistor (10).

13. Procédé de régulation selon la revendication 12, comprenant une transmission d'un signal de contre-réaction par une boucle de contre-réaction de ladite alimentation à découpage (31) pour réguler la première tension d'alimentation (Vo) et un abaissement de la tension (Vfb) du signal de contre-réaction d'un décalage du niveau de référence (VOUT_REF) et d'une marge supplémentaire (Voffset), de sorte que l'alimentation à découpage (31) régule la première tension d'alimentation (Vo) audit niveau de référence (VOUT_REF) et de la marge supplémentaire (Voffset).

14. Procédé de régulation selon l'une des revendications 12 ou 13, dans lequel la première tension d'alimentation (Vo) est générée par l'alimentation à découpage (31) fonctionnant en commutation à une fréquence de commutation forcée (Fpwm), et dans lequel le filtrage de la composante haute-fréquence (Vhf) est réalisé à une fréquence de coupure (Fc) inférieure à la fréquence de commutation forcée (Fpwm).

15. Procédé de régulation selon la revendication 14, dans lequel la fréquence de coupure (Fc) est inférieure à la fréquence de commutation forcée (Fpwm) d'un facteur au moins de 100.
